# EUROPÄISCHE PATENTSCHRIFT

(11) **EP 1 446 846 B1**
(45) Veröffentlichungstag und Bekanntmachung des Hinweises auf die Patenterteilung: **13.04.2005**
(21) Anmeldenummer: 02794954.4
(22) Anmeldetag: 12.11.2002
(51) Int. Cl.: H01M 2/00

(54) **VORRICHTUNG UND VERFAHREN ZUR ABGASREINIGUNG FÜR EINE DIREKT-ALKOHOL-BRENNSTOFFZELLE UND EINEN DARAUS AFGEBAUTEN BRENNSTOFFZELLENSTAPEL**
DEVICE AND METHOD FOR CLEANING WASTE GASES FOR A DIRECT ALCOHOL FUEL CELL OR FOR A FUEL CELL STACK CONSTRUCTED THEREFROM
DISPOSITIF ET PROCEDE D'EPURATION DE GAZ BRULES POUR PILE A COMBUSTIBLE ALCOOL DIRECT OU POUR UN EMPILEMENT DE PILES A COMBUSTIBLE

(30) Priorität: 21.11.2001 DE 10157139
(43) Veröffentlichungstag der Anmeldung: 18.08.2004
(73) Patentinhaber: FORSCHUNGSZENTRUM JÜLICH GMBH, 52425 Jülich (DE)
(72) Erfinder: DOHLE, Hendrik, 52224 Stolberg (DE); MERGEL, Jürgen, 52428 Jülich (DE)
(86) Internationale Anmeldenummer: PCT/DE2002/004166
(87) Internationale Veröffentlichungsnummer: WO 2003/047010

(56) Entgegenhaltungen:
- DE-A- 10 107 529
- US-A- 6 110 613

## Beschreibung

Die Erfindung betrifft eine Vorrichtung zur Reinigung von Abgasen, insbesondere von kathodenseitig entstehenden Abgasen einer Direkt-Alkohol-Brennstoffzelle, bzw. für einen daraus gebildeten Brennstoffzellenstapel.

### Stand der Technik

Aus DE-199 21 816 C1 ist ein Brennstoffzellensystem umfassend einzelne Brennstoffzellen bekannt. Das System weist weiterhin eine Entsorgungsvorrichtung zur Aufnahme der durch den Betrieb der Brennstoffzellen gebildeten Abfallprodukte auf. Dies ist insbesondere eine Filtereinrichtung und eine Ionenaustauschereinrichtung.
Durch Filtereinrichtungen ist es vorteilhaft möglich die entstehenden Abfallprodukte voneinander zu trennen und getrennt zu sammeln, was die spätere Entsorgung erleichtert. Dies kann beispielsweise zur Umwandlung von an der Anode entstehendem gasförmigem CO₂ zu festem Karbonat genutzt werden.

Bei der in DE 199 21 816 C offenbarten Ionenaustauschereinrichtung als Entsorgungsvorrichtung wird zunächst ein Abfallprodukt umgewandelt und anschließend in einer Aufnahmeeinrichtung gesammelt. Bei dem in DE 199 21 816 C1 beschriebenen Brennstoffzellensystem kann die Brennstoffseite des Systems so vorteilhaft völlig entkoppelt von der Umwelt betrieben werden.

Nachteilig bei diesem System ist jedoch, daß die Abfallprodukte innerhalb des Systems zunächst gesammelt werden, und erst zu einem bestimmten Zeitpunkt aus dem System entnommen werden.

Dokument US-A-6 110 613 offenbart eine Vorrichtung für eine Direkt-Alkohol-Brennstoffzelle, die eine Zuführungsleitung und eine Abführungsleitung umfasst, wobei eine wasser- und sauerstoffdurchlässige Membran beide Leitungen in einem bestimmten Bereich voneinander trennt. Die Membran ist in diesem Bereich zusätzlich mit einem pulverförmigen Trocknungsmittel versehen, welches der Sorption von Alkohol und/oder Wasser aus dem Abgasstrom und der Desorption derselben in den Oxidationstrom dient. Aus dieser Druckschrift geht nicht hervor, im Bereich der Membran einen Katalysator zu verwenden, der Alkohol umzuwandeln vermag.

### Aufgabe und Lösung

Die Aufgabe der Erfindung ist es, eine Vorrichtung zur Abgasreinigung für eine PEM-Brennstoffzelle zu schaffen, bei welchem ein unerwünschter Austrag an Alkohol vermieden wird.

Die Aufgabe wird gelöst durch eine Vorrichtung zur Abgasreinigung für eine Direkt-Alkohol-Brennstoffzelle gemäß Hauptanspruch, sowie durch ein Verfahren zum Betreiben einer solchen Brennstoffzelle, bzw. eines Brennstoffzellenstapels gemäß der Nebenansprüche. Vorteilhafte Ausführungsformen der Reinigungsvorrichtung, des Brennstoffzellensystems und des Verfahrens sind den jeweils rückbezogenen Ansprüchen zu entnehmen.

### Gegenstand der Erfindung

Die erfindungsgemäße Vorrichtung zu Abgasreinigung für eine Direkt-Alkohol-Brennstoffzelle verbindet die Vorteile eines Wärmeaustauschers mit denen einer Abluftreinigung.

Die Vorrichtung zur Abgasreinigung umfaßt eine Zuführungsleitung für die Zuführung eines Oxidationsmittels zum Kathodenraum der Direkt-Alkohol-Brennstoffzelle und eine Abführungsleitung für die Abführung eines Abgases aus der Direkt-Alkohol-Brennstoffzelle. Die Zu- und Abführungsleitung sind zumindest in einem Bereich nebeneinander angeordnet und durch eine poröse Schicht voneinander getrennt. Vorteilhaft sind die Leitungen für eine Betriebsführung im Gegenstrom vorgesehen.

Die Vorrichtung zur Abgasreinigung weist darüber hinaus einen Katalysator auf, der auf der Innenseite der Abführungsleitung in dem Bereich der porösen Schicht angeordnet ist. Dieser Katalysator wandelt regelmäßig den in der Brennstoffzelle unverbrauchten Alkohol, insbesondere Methanol, zusammen mit überschüssigem Luftsauerstoff in weniger schädliche Produkte, wie beispielsweise Wasser und CO₂ um. Als ein dafür geeigneter Katalysator ist beispielsweise Pt und/oder Pd zu nennen. Während des Betriebs einer Direkt-Alkohol-Brennstoffzelle kommt es regelmäßig dazu, daß ein nicht unerheblicher Teil des Brennstoffs, das heißt des Alkohols, insbesondere des Methanols, durch Diffusion durch die Polymer-Elektrolyt-Membran (PEM) in den Kathodenraum übertritt. Insbesondere bei Direkt-Methanol-Brennstoffzellen ist in Fachkreisen das Problem des Methanol cross-overs bekannt.

Optional kann auch die Anode an diese Abgasleitung angeschlossen sein. Dadurch wird auch das auf der Anode entstehende CO₂, welches regelmäßig auch nicht umgesetzten Alkohol beinhaltet, in der Reinigungsvorrichtung gereinigt.

Die katalytische Umwandlung des in der Brennstoffzelle noch nicht umgesetzten Methanols in dem Abgas durch die Reinigungsvorrichtung wird vorteilhaft durch die der Abluft innewohnende Wärme beschleunigt. Dabei kann die Abluft aus einem Kathodenraum und/oder aus einem Anodenraum einer oder mehrerer Brennstoffzellen stammen.

In einer vorteilhaften Ausgestaltung der Reinigungsvorrichtung ist die poröse Schicht als eine wasserdurchlässige Membran ausgebildet. Dies ermöglicht eine vorteilhafte Befeuchtung des zugeführten Oxidationsmittels durch den Durchtritt von Wasser, welches sich in Form von Wasser oder Dampf in dem Abgas befindet durch die Membran auf die Oxidationsmittelseite. Da die Zuluft (Oxidationsmittel) regelmäßig weniger wassergesättigt ist als das Abgas, kommt es aufgrund des Konzentrationsgradientens regelmäßig zu einer Diffusion von Wasser durch die Membran in die trockene Zuluft.

Weiterhin wird der Wärmeübergang durch den Durchtritt des Wassers als Wasser oder Dampf vorteilhaft verbessert. Geeignete Materialien für eine solche wasserdurchlässige Membran sind beispielsweise Nafion© oder auch Membranen auf Silikonbasis.

In einer ebenfalls vorteilhaften Ausgestaltung der Reinigungsvorrichtung ist die poröse Schicht, bzw. die wasserdurchlässige Membran zusätzlich sauerstoffdurchlässig ausgebildet. Dadurch wird ein zusätzlicher Luft-, bzw. Sauerstoffeintrag von der Oxidationsmittelleitung durch die sowohl wasser- als auch luftdurchlässige Membran in die Abluftleitung ermöglicht. Als Folge kommt es zu einer effektiveren katalytischen Umsetzung des unerwünschten Alkohols in dem Abgas.

In der erfindungsgemäßen Vorrichtung zur Abgasreinigung vereinigen sich somit die Vorteile einer internen Wärmenutzung und eines zumindest teilweisen Wasserkreislaufes mit einer effektiven katalytischen Umsetzung und Reduktion von ausgetragenem, nicht umgesetzten Alkohol lokal an einem Ort des Brennstoffzellensystems. Die Abgasreinigung, die gleichzeitig als Wärmeaustauscher und Befeuchtereinheit für das zugeführte Oxidationsmittel fungiert, kann dadurch vorteilhaft besonders kompakt ausgestaltet sein.

### Spezieller Beschreibungsteil

Nachfolgend wird der Gegenstand der Erfindung anhand von Figuren näher erläutert, ohne daß der Gegenstand der Erfindung dadurch eingeschränkt wird.

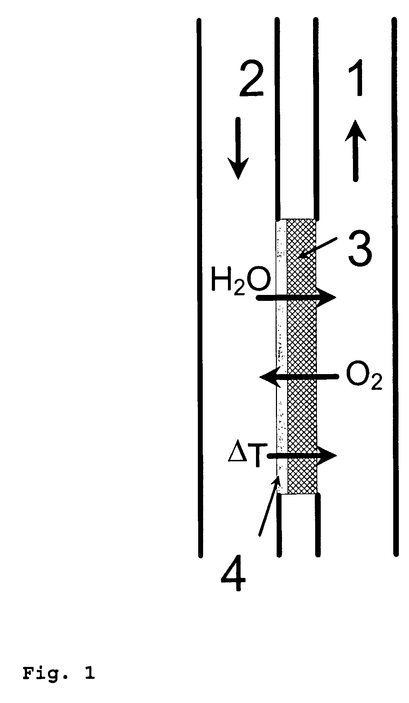

Die Figur 1 zeigt schematisch die erfindungsgemäße Vorrichtung zur Abgasreinigung. Eine Zuluftleitung 1 für die Zuführung eines Oxidationsmittels zum Kathodenraum einer Brennstoffzelle und eine Abluftleitung 2 für die Abführung eines Abgases aus einer Brennstoffzelle sind zumindest teilweise parallel zueinander angeordnet und in diesem Bereich durch eine poröse Schicht 3 getrennt. Vorteilhaft werden die Leitungen derart angeordnet, daß sich dadurch eine Betriebsführung im Gegenstrom ergibt.
Auf der der Abgasleitung zugewandten Seite der porösen Schicht befindet sich Katalysator 4 zur Umsetzung von Alkohol im Abgas, welcher in der Brennstoffzelle nicht vollständig umgesetzt wurde.
Die Pfeile markieren die Richtung der vorteilhaften Stoffströme (Wasser und Sauerstoff) und den Wärmetransport durch die poröse Schicht hindurch.

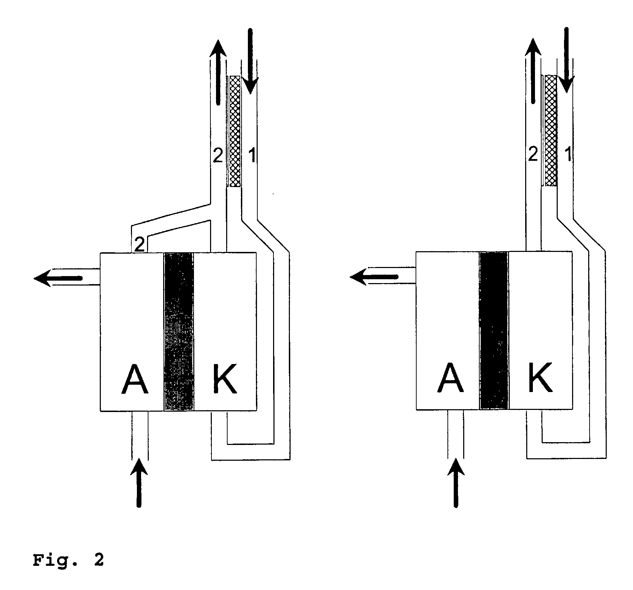

Die Figur 2 zeigt zwei Ausführungsformen der erfindungsgemäßen Reinigungsvorrichtung, die jeweils einer Brennstoffzelle zugeordnet ist. Bei der rechten Figur ist die Vorrichtung zur Reinigung von Abgas in die Zu- und Abführungsleitungen des Oxidationsmittels auf der Kathodenseite angeordnet. Möglich ist aber auch die Anordnung, wie sie links in der Figur 2 angedeutet wird. Das Anodenabgas, insbesondere gebildetes CO₂, wird zusammen mit Anteilen von Wasserdampf und Alkohol, insbesondere Methanol, in das Kathodenabgas geleitet und dann zusammen der erfindungsgemäßen Vorrichtung zur Abgasreinigung zugeführt.

Bei Brennstoffzellenstapeln, ist auch eine Anordnung der Vorrichtung zur Abgasreinigung in sogenannten Sammelkanälen denkbar, anstelle in einzelnen Zu- und Abführungskanälen für jeweils eine Brennstoffzelle.

## Patentansprüche

1. Vorrichtung zur Abgasreinigung für eine Direkt-Alkohol-Brennstoffzelle oder einen darauf aufgebauten Brennstoffzellenstapel, umfassend wenigstens eine Zuführungsleitung (1) zur Zuführung eines Oxidationsmittels in einen Kathodenraum der Brennstoffzelle und wenigstens eine Abführungsleitung (2) zur Abführung von Abgas aus der Brennstoffzelle, sowie
a) einen Bereich, in dem die Zuführungs- und Abführungsleitung zumindest teilweise nebeneinander angeordnet und durch eine poröse Schicht (3) getrennt sind, und
b) einen Katalysator (4), der auf der zur Abführungsleitung (2) gerichteten Oberfläche der porösen Schicht (3) aufgebracht ist,
**dadurch gekennzeichnet, dass**
der Katalysator Alkohol umzuwandeln vermag.

2. Vorrichtung zur Abgasreinigung nach vorhergehendem Anspruch, wobei die poröse Schicht als eine wasserdurchlässige Membran ausgebildet ist.

3. Vorrichtung zur Abgasreinigung nach einem der vorhergehenden Ansprüche 1 bis 2, wobei die poröse Schicht zusätzlich sauerstoffdurchlässig ausgestaltet ist.

4. Vorrichtung zur Abgasreinigung nach einem der vorhergehenden Ansprüche 1 bis 3, bei dem die Abführungsleitung sowohl zur Abführung von Abgas sowohl aus einem Anodenraum als auch aus einem Kathodenraum ausgebildet ist.

5. Vorrichtung zur Abgasreinigung nach einem der vorhergehenden Ansprüche 1 bis 4, bei dem der Katalysator eine Methanolumwandlung zu katalysieren vermag.

6. Direkt-Alkohol-Brennstoffzelle mit wenigstens einer Vorrichtung zur Abgasreinigung nach einem der Ansprüche 1 bis 5.

7. Brennstoffzellenstapel, mit wenigstens zwei Direkt-Alkohol-Brennstoffzellen und wenigstens einer Vorrichtung zur Abgasreinigung nach einem der Ansprüche 1 bis 5.

8. Verfahren zum Betreiben einer Direkt-Alkohol-Brennstoffzelle oder eines Direkt-Alkohol-Brennstoffzellenstapels mit wenigstens einer Vorrichtung zur Abgasreinigung nach einem der Ansprüche 1 bis 5 mit den Schritten
a) das Abgas wenigstens einer Brennstoffzelle wird durch eine Abführungsleitung geführt, die über eine poröse Schicht an eine Zuführungsleitung zur Zuführung eines Oxidationsmittels zu wenigstens einer Brennstoffzelle angrenzt,
b) es findet ein Wärmeübergang aus dem Abgas über die poröse Schicht zum Katalysator statt,
c) der Katalysator wandelt den in dem Abgas befindlichen Alkohol zumindest teilweise in Wasser und CO₂ um.

9. Verfahren nach vorhergehendem Anspruch 8,
wobei zusätzlich Wasser aus dem in der Abführungsleitung befindlichen Abgas durch die als wasserdurchlässige Membran ausgebildete poröse Schicht in die Zuführungsleitung diffundiert, und das in der Zuführungsleitung befindliche Oxidationsmittel das Wasser zumindest teilweise aufnimmt.

10. Verfahren nach einem der Ansprüche 8 bis 9,
wobei zusätzlich Sauerstoff aus dem in der Zuführungsleitung befindliche Oxidationsmittel durch die als sauerstoffdurchlässige Membran ausgebildete poröse Schicht in das in der Abführungsleitung befindlichen Abgas diffundiert, und dort zur katalytischen Umsetzung des Alkohols beiträgt.

## Claims

1. Device for cleaning waste gases for a direct alcohol fuel cell or for a fuel cell stack constructed from them, comprising at least one supply pipe (1) for supplying an oxidising agent in a cathode area of the fuel cell and at least one removal pipe (2) for removing waste gas from the fuel cell and
a) an area in which the supply and removal pipes are arranged at least partly next to each other, separated by a porous layer (3), and
b) a catalyst (4), which is on the surface of the porous layer (3) facing towards the removal pipe (2),
**characterised by** the fact that
the catalyst can convert alcohol.

2. Device for cleaning waste gases according to the previous claim, in which the porous layer is made as a water permeable membrane.

3. Device for cleaning waste gases according to one of the previous claims 1 to 2, in which the porous layer is also made permeable to oxygen.

4. Device for cleaning waste gases according to one of the previous claims 1 to 3, in which the removal pipe is made for removing waste gas from an anode area as well as a cathode area.

5. Device for cleaning waste gases according to one of the previous claims 1 to 4, in which the catalyst can catalyse a methanol conversion.

6. Direct alcohol fuel cell with at least one device for cleaning waste gases according to one of claims 1 to 5.

7. Fuel cell stack with at least two direct alcohol fuel cells and at least one device for cleaning waste gases according to one of claims 1 to 5.

8. Method for operating a direct alcohol fuel cell or a direct alcohol fuel cell stack with at least one device for cleaning waste gases according to one of claims 1 to 5 with the stages
a) the waste gas of at least one fuel cell is taken through a removal pipe, which adjoins a pipe for taking an oxidising agent to at least one fuel cell through a porous layer,
b) heat is transferred from the waste gas through the porous layer to the catalyst
c) the catalyst converts the alcohol in the waste gas at least partly into water and CO₂.

9. Method according to the previous claim 8, in which water is also diffused from the waste gas in the removal pipe through the porous layer made as a water permeable membrane into the supply pipe and the oxidising agent in the supply pipe at least partly absorbs the water.

10. Method according to one of claims 8 to 9, in which oxygen is also diffused from the oxidising agent in the supply pipe through the porous layer made as an oxygen permeable membrane in the waste gas into the removal pipe and contributes to the catalytic conversion of the alcohol.

## Revendications

1. Dispositif d'épuration des gaz brûlés pour une pile à combustible alcool direct ou pour un empilement de piles à combustible qui en est constitué, comprenant au moins un conduit (1) d'apport d'un agent oxydant dans une chambre cathodique de la pile à combustible et au moins un conduit (2) d'évacuation des gaz brûlés de la pile à combustible, ainsi que
a) une zone dans laquelle le conduit d'apport et le conduit d'évacuation sont disposés au moins en partie côte à côte et sont séparés par une couche (3) poreuse, et
b) un catalyseur (4), qui est déposé sur la surface, dirigée vers le conduit (2) d'évacuation, de la couche (3) poreuse,
**caractérisé en ce que**
le catalyseur peut transformer un alcool.

2. Dispositif d'épuration des gaz brûlés suivant la revendication précédente, dans lequel la couche poreuse est constituée sous la forme d'une membrane perméable à l'eau.

3. Dispositif d'épuration des gaz brûlés suivant l'une des revendications 1 à 2 précédentes, dans lequel la couche poreuse est en outre perméable à l'oxygène.

4. Dispositif d'épuration des gaz brûlés suivant l'une des revendications 1 à 3 précédentes, dans lequel le conduit d'évacuation est constitué, pour évacuer les gaz brûlés, à la fois d'une chambre anodique et d'une chambre cathodique.

5. Dispositif d'épuration des gaz brûlés suivant l'une des revendications 1 à 4 précédentes, dans lequel le catalyseur peut catalyser une transformation du méthanol.

6. Pile à combustible alcool direct comprenant au moins un dispositif d'épuration des gaz brûlés suivant l'une des revendications 1 à 5.

7. Empilement de piles à combustible comprenant au moins deux piles à combustible alcool direct et au moins un dispositif d'épuration des gaz suivant l'une des revendications 1 à 5.

8. Procédé pour faire fonctionner une pile à combustible alcool direct ou un empilement de piles à combustible alcool direct, comprenant au moins un dispositif d'épuration des gaz suivant l'une des revendications 1 à 5, comprenant les stades dans lesquels:
a) on envoie les gaz brûlés d'au moins une pile à combustible dans un conduit d'évacuation, qui est adjacent par une couche poreuse à un conduit d'apport d'un agent oxydant à au moins une pile à combustible,
b) il se produit un transfert de chaleur des gaz brûlés au catalyseur par l'intermédiaire de la couche poreuse,
c) le catalyseur transforme l'alcool se trouvant dans les gaz brûlés au moins en partie en eau et en CO₂.

9. Procédé suivant la revendication 8 précédente, dans lequel en outre de l'eau diffuse des gaz brûlés se trouvant dans le conduit d'évacuation dans le conduit d'apport en passant à travers la couche poreuse formée d'une membrane perméable à l'eau et l'agent oxydant se trouvant dans le conduit d'évacuation absorbe l'eau au moins en partie.

10. Procédé suivant l'une des revendications 8 à 9, dans lequel en outre de l'oxygène diffuse de l'agent oxydant se trouvant dans le conduit d'apport dans les gaz brûlés se trouvant dans le conduit d'évacuation en passant à travers la couche poreuse formée d'une membrane perméable à l'oxygène et y contribue à la conversion catalytique de l'alcool.
